Europäisches Patentamt

European Patent Office

Office européen des brevets

(19)

(11) **EP 1 626 302 A1**

(12) **EUROPEAN PATENT APPLICATION**

(43) Date of publication:
**15.02.2006 Bulletin 2006/07**

(51) Int Cl.:
*G02B 26/02* (2006.01)    *G02F 1/167* (2006.01)

(21) Application number: **05254504.3**

(22) Date of filing: **20.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **10.08.2004  US 915753**

(71) Applicant: **Hewlett-Packard Development
Company, L.P.
Houston, Texas 77070 (US)**

(72) Inventors:
  • **Faase, Kenneth
    Corvallis, OR 97330 (US)**

  • **Morehouse, Charles C.
    Cupertino, CA 95014-2948 (US)**
  • **Weber, Timothy L.
    Corvallis, OR 97333 (US)**
  • **McKinnell, James
    Salem, OR 97304 (US)**
  • **Liebeskind, John
    Corvallis, OR 97330 (US)**

(74) Representative: **Jehan, Robert et al
Williams Powell
Morley House
26-30 Holborn Viaduct
London EC1A 2BP (GB)**

(54) **Display device**

(57)    A display device includes a base (402, 502, 602, 702) and light valve components formed over the base (402, 502, 602, 702). The base (402, 502, 602, 702) includes electrical circuitry. Each of the light valve components includes a chamber (406, 506, 606, 706) that defines an optical path, particles (408, 508, 608, 708) within the chamber (406, 506, 606, 706), and a mechanism for transversely repositioning the particles (408, 508, 608, 708) in relation to the optical path in response to voltages provided by the electrical circuitry.

FIG. 4A

EP 1 626 302 A1

FIG. 4B

**Description**

The present invention relates to a display device.

There is a significant demand for consumer electronics and apparatuses in general that include digital display devices. Such displays employ various arrangements of light valves or optical engines. Unfortunately, complex and/or expensive fabrication processes are often required to make optical engines that are suitable for modem digital display devices.

Some light valve technologies use electrostatics to mechanically actuate moving mirror structures, an approach that historically has involved complex fabrication processes. Moreover, light valves that include moving mirror structures are typically subject to reliability problems such as hinge fatigue and particle contamination blocking rotational paths of the mirrors. Additionally, light valves that include moving mirror structures are typically subject to tolerance stack restrictions which lead to low yield/high die costs and a relatively prohibitive cost for the digital display device.

The present invention seeks to provide an improved display device.

According to an aspect of the present invention, there is provided a display device as specified in claim 1.

The preferred embodiments can provide light valves and digital display devices that do not include moving mirror structures. There is also taught systems for manufacture light valves and digital display devices while lessening the typical complexity and cost of prior approaches.

Embodiments of the present invention are described below, by way of example only, with reference to the accompanying drawings, in which:

Figure 1 is a perspective view of a projection display device according to an example embodiment;

Figure 2 shows electronic paper based on a tri-colour system according to an example embodiment;

Figure 3 is a plot of example terminal velocity calculations as a function of particle size and solvent;

Figures 4A and 4B are cross-sectional views of an example embodiment of a reflective optical engine, including an outer ring electrode, in closed and open positions, respectively;

Figures 5A and 5B are cross-sectional views of an example embodiment of a reflective optical engine, including an outer wall electrode, in closed and open positions, respectively;

Figures 6A and 6B are cross-sectional views of an example embodiment of a transmissive optical engine, including an outer ring electrode, in closed and open positions, respectively;

Figures 7A and 7B are cross-sectional views of an example embodiment of a transmissive optical engine, including an outer wall electrode, in closed and open positions, respectively;

Figure 8 is a perspective view of a spatial light modulator according to an example embodiment;

Figure 9 is a cross-sectional view of an example optical engine during fabrication;

Figure 10 is an example process flow for fabricating the optical engine of Figure 9; and

Figure 11 is a process flow for a Micro-Electro-Mechanical Systems (MEMS) portion of an optical engine fabrication process according to an example embodiment.

The following is a detailed description for carrying out embodiments of the invention. This description is not to be taken in a limiting sense, but is made merely for the purpose of illustrating the general principles taught herein.

The preferred embodiments generally provide display devices with actuated particle optical engines. By way of example, the particles are charged, substantially opaque, and have micron-scale, sub-micron scale, nanometre scale or other scale dimensions. Micron-scale dimensions refers to dimensions that range from 1 micrometer to a few micrometers in size. Submicron scale dimensions refers to dimensions that range from 1 micrometer down to 0.05 micrometers. Nanometre scale dimensions refers to dimensions that range from 0.1 nanometres to 50 nanometres (0.05 micrometers). The optical engines described herein can be used as light valves components in applications including (but not limited to): digital projectors, electronic displays, electronic paper products, PDA displays, transmitted light projectors, transparent displays, flat panel displays, window size transparent displays, billboards, and windows that have electronically controlled transparency.

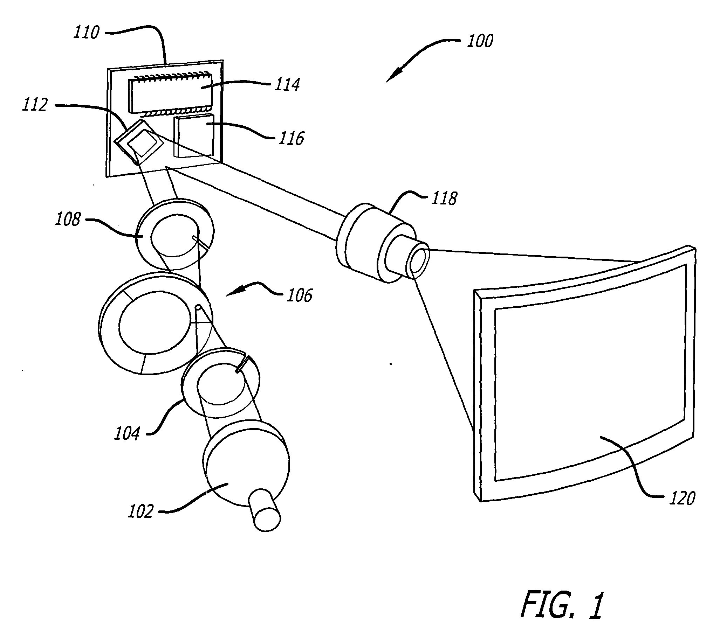

Referring to Figure 1, a projection display device 100 according to an example embodiment includes a light source 102, a condensing lens 104, a colour wheel 106, a shaping lens 108, a circuit board 110 (including a spatial light modulator (SLM) chip 112, a controller/video processor 114, and a memory device 116), a projection lens 118 and a screen 120, configured as shown. The SLM chip 112 includes an array of light valve components, such as the optical engine embodiments described below, which are individually controlled by the controller/video processor 114 to reflect light incident upon certain light valve components toward the projection lens 118. In this example, the colour wheel 106 filters light from the condensing lens 104 into red, green, and blue (R, G and B), for example. The "on" and "off" states of the individual light valve components are coordinated with control of the colour wheel 106 to generate colours as desired. As an alternative to employing a colour wheel, a light dividing mechanism (e.g., a prism) can be used to divide light into multiple components (e.g., R, G, and B), and multiple SLM chips, each dedicated to one of the light components, can be configured to direct their respective reflected light outputs to the projection lens where the colours are combined for projection.

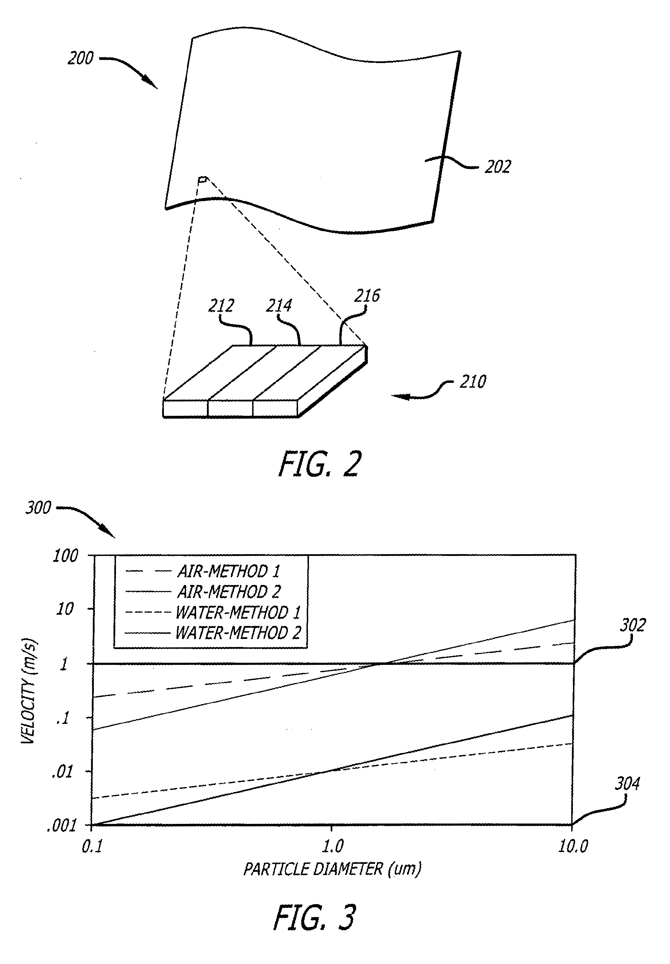

The optical engines described herein can be used to provide other types of tri-colour systems. By way of example, and referring to Figure 2, electronic paper 200 includes an array of light valve components, such as the optical engine embodiments described below, which are individually controlled to reflect light incident upon certain light valve components. In this example, the light valve components are supported in a flexible substrate 202, and each pixel 210 includes subpixels 212, 214 and 216 (e.g., R, G, and B, respectively).

Thus, in various embodiments, a method of using a display device includes providing a display device with actuated particle engines, and using the actuated particle engines to generate pixels for an image to be displayed by the display device.

Apart from the charged particles, the optical engines described herein require no solid moving parts and, therefore, are not subject to hinge fatigue, MEMS stiction concerns or severe process control restraints. Also, in various embodiments, the optical engines described herein provide unit-cells that are simpler to manufacture and smaller in size than, for example, moving mirror SLM pixels, thus potentially resulting in lower costs and/or increased resolution.

In an example embodiment, a display device includes a base and light valve components formed over the base. The base includes electrical circuitry. Each of the light valve components includes a chamber that defines an optical path, particles within the chamber, and a mechanism for transversely repositioning the particles in relation to the optical path in response to voltages provided by the electrical circuitry.

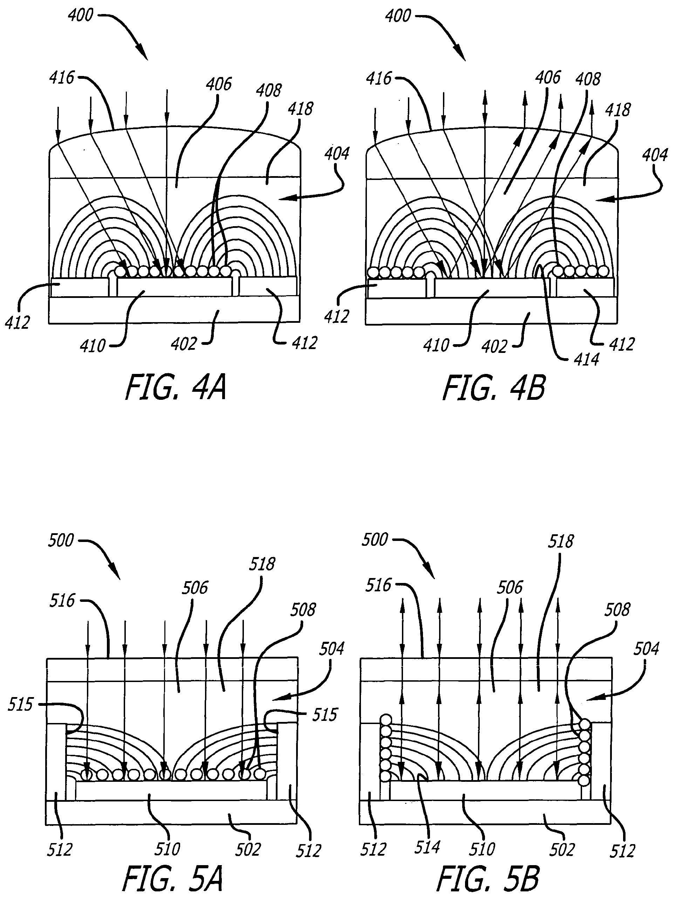

Referring to Figures 4A and 4B, in an example embodiment, a reflective optical engine 400 includes a substrate 402 and light valves 404 formed over the substrate 402 (for clarity, a single light valve 404 is shown in these Figures). The substrate (e.g., silicon) includes electrical circuitry, and each of the light valves 404 includes a chamber 406 that defines an optical path, charged particles 408 within the chamber 406, a centre electrode 410 positioned within the optical path, and an outer electrode 412 positioned around the centre electrode 410. In this example, the centre electrode 410 includes a reflective surface 414 (e.g., polished aluminium) facing away from the substrate 402, and the centre electrode 410 and the outer electrode 412 are formed over the substrate 402 and are substantially planar. In this example embodiment, the reflective optical engine 400 includes a microlens 416 (e.g., from an array of microlenses positioned adjacent to the light valves such that, for each of the light valves, one of the microlenses directs light along the optical path and incident upon the centre electrode). By way of example, the microlens array includes an arrangement of UV cured, optical epoxy microlenses on glass, quartz or some other substrate. The reflective optical engine 400 can also include a solvent material 418 (liquid or gas) within the chamber 406.

In this example, the electrical circuitry is configured to apply electrical potentials to one or more of the centre and outer electrodes 410, 412 of each of the light valves 404 such that the charged particles 408 in each of the light valves 404 will be selectively drawn to the centre electrode 410 or to the outer electrode 412. The reflective optical engine 400 has two electrically activated states, "on" and "off'. In this example, in the mirror "on" state (Figure 4B), negatively charged particles 408 (e.g., toner particles) are repulsed from the centre electrode 410 (e.g., the inner square portion of a mirror cell), which has a -5V potential applied to it, and the particles 408 are attracted to the outer electrode 412 (e.g., the outer ring of a mirror cell) at ground potential. In this state, light reflects off the particle-free reflective surface 414 of the centre electrode 410. This mirror "on" surface is fixed in position and established by a fabrication process as discussed below. In this example, in the mirror "off" state (Figure 4A), the particles 408 are attracted to the centre electrode 410, which has a +5V potential applied to it, and pulled from the outer electrode 412. In this state, the particles 408 coat the reflective surface 414 of the centre electrode 410 and absorb the incident light. The microlens array 416 focuses the incident and reflected light onto the reflective surface 414 of the centre electrode 410, and away from (within) the outer electrode 412. The focused light increases the mirror array fill factor and subsequent contrast ratio.

Referring to Figures 5A and 5B, in an example embodiment, a reflective optical engine 500 includes a substrate 502 and light valves 504 formed over the substrate 502 (for clarity, a single light valve 504 is shown in these Figures). The substrate (e.g., silicon) includes electrical circuitry, and each of the light valves 504 includes a chamber 506 that defines an optical path, charged particles 508 within the chamber 506, a centre electrode 510 positioned within the optical path, and an outer electrode 512 positioned around the centre electrode 510. In this example, the centre electrode 510 includes a reflective surface 514 (e.g., polished aluminium) facing away from the substrate 502. In this example, for each of the light valves, the centre electrode 510 and the outer electrode 512 are formed over the substrate 502, and the outer electrode 512 includes an inner wall 515 that is substantially perpendicular to the reflective surface 514. In this example embodiment, the reflective optical engine 500 includes a cover 516 (e.g., glass) that is substantially transparent. The reflective optical engine 500 can also include a solvent material 518 (liquid or gas) within the chamber 506.

In this example, the electrical circuitry is configured to apply electrical potentials to one or more of the centre and outer electrodes 510, 512 of each of the light valves 504 such that the charged particles 508 in each of the light valves 504 will be selectively drawn to the centre electrode 510 or to the outer electrode 512. The reflective optical engine 500 has two electrically activated states, "on" and "off'. In this example, in the mirror "on" state (Figure 5B), negatively charged particles 508 (e.g., toner particles) are repulsed from the centre electrode 510 (e.g., the inner square portion of a mirror cell), which has a -5V potential applied to it, and the particles 508 are attracted to the outer electrode 512 (e.g., the outer wall of a mirror cell) at ground potential. In this state, light reflects off the particle-free reflective surface 514 of the centre electrode 510. This mirror "on" surface is fixed in position and established by a fabrication process as discussed below. In this example, in the mirror "off" state (Figure 5A), the particles 508 are attracted to the centre electrode 510, which has a +5V potential applied to it, and pulled from the outer electrode 512. In this state, the particles 508 coat the reflective surface 514 of the centre electrode 510 and absorb the incident light.

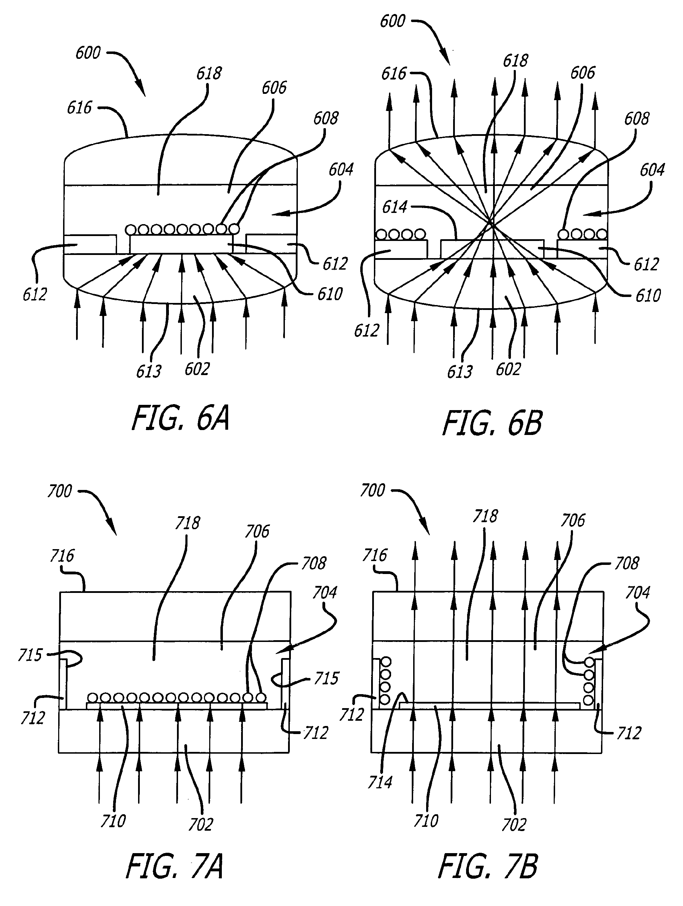

Referring to Figures 6A and 6B, in an example embodiment, a transmissive optical engine 600 includes a base 602 and light valves 604 formed over the base 602. (For clarity, a single light valve 604 is shown in these figures.) The base 602 (e.g., a microlens array including transparent traces and/or transparent transistor logic) is substantially transparent. Each of the light valves 604 includes a chamber 606 that defines an optical path, charged particles 608 within the chamber 606, a centre electrode 610 positioned within the optical path, and an outer electrode 612 positioned around the centre electrode 610. In this example, the centre electrode 610 (e.g., Indium Tin Oxide (ITO)) is substantially transparent, and the centre electrode 610 and the outer electrode 612 are formed over the base 602 and are substantially planar. In this example, for each of the light valves, the base 602 includes a microlens surface 613 which directs light along the optical path and incident upon the centre electrode 610. In this example embodiment, the transmissive optical engine 600 includes another microlens 616 (e.g., from an array of microlenses positioned adjacent to the light valves such that, for each of the light valves, one of the microlenses directs light passing through the centre electrode). By way of example, the second microlens array includes an arrangement of UV cured, optical epoxy microlenses on glass, quartz or some other substrate. The transmissive optical engine 600 can also include a solvent material 618 (liquid or gas) within the chamber 606.

In this example, the electrical circuitry is configured to apply electrical potentials to one or more of the centre and outer electrodes 610, 612 of each of the light valves 604 such that the charged particles 608 in each of the light valves 604 will be selectively drawn to the centre electrode 610 or to the outer electrode 612. The transmissive optical engine 600 has two electrically activated states, "on" and "off'. In this example, in the mirror "on" state (Figure 6B), negatively charged particles 608 (e.g., toner particles) are repulsed from the centre electrode 610 (e.g., the inner square portion of a cell), which has a - 5V potential applied to it, and the particles 608 are attracted to the outer electrode 612 (e.g., the outer ring of a cell) at ground potential. In this state, light passes through the centre electrode 610 and exits through the microlens 616. The centre electrode 610, the mirror "on" transmissive element, is fixed in position and established by a fabrication process as discussed below. In this example, in the mirror "off" state (Figure 6A), the particles 608 are attracted to the centre electrode 610, which has a +5V potential applied to it, and pulled from the outer electrode 612. In this state, the particles 608 coat a surface 614 of the centre electrode 610 and absorb the incident light.

Referring to Figures 7A and 7B, in an example embodiment, a transmissive optical engine 700 includes a base 702 and light valves 704 formed over the base 702. (For clarity, a single light valve 704 is shown in these figures.) The base 702 (e.g., a substrate including transparent traces and/or transparent transistor logic) is substantially transparent. Each of the light valves 704 includes a chamber 706 that defines an optical path, charged particles 708 within the chamber 706, a centre electrode 710 positioned within the optical path, and an outer electrode 712 positioned around the centre electrode 710. In this example, the centre electrode 710 (e.g., ITO) is substantially transparent. In this example, for each of the light valves, the centre electrode 710 and the outer electrode 712 are formed over the base 702, and the outer electrode 712 includes an inner wall 715 that is substantially perpendicular to a surface 714 of the centre electrode 710 that faces away from the base 702. In this example embodiment, the transmissive optical engine 700 includes a cover 716 (e.g., glass, or a polymer) that is substantially transparent. The transmissive optical engine 700 can also include a solvent material 718 (liquid or gas) within the chamber 706.

In this example, the electrical circuitry is configured to apply electrical potentials to one or more of the centre and outer electrodes 710, 712 of each of the light valves 704 such that the charged particles 708 in each of the light valves 704 will be selectively drawn to the centre electrode 710 or to the outer electrode 712. The transmissive optical engine 700 has two electrically activated states, "on" and "off". In this example, in the mirror "on" state (Figure 7B), negatively charged particles 708 (e.g., toner particles) are repulsed from the centre electrode 710 (e.g., the inner square portion of a cell), which has a - 5V potential applied to it, and the particles 708 are attracted to the outer electrode 712 (e.g., the outer wall of a cell) at ground potential. In this state, light passes through the centre electrode 710 and exits through the cover 716. The centre electrode 710, the mirror "on" transmissive element, is fixed in position and established by a fabrication process as discussed below. In this example, in the mirror "off" state (Figure 7A), the particles 708 are attracted to the centre electrode 710, which has a +5V potential applied to it, and pulled from the outer electrode 712. In this state, the particles 708 coat the surface 714 of the centre electrode 710 and absorb the incident light. It should be noted for the various embodiments described herein that an acceptable range of voltages for the electrodes is - 50V to +50V depending upon the dielectric strength of the solvents and/or the particles.

In an example embodiment, a display device includes a substrate that is substantially transparent and flexible, and light valve components formed over the substrate. The substrate includes electrical circuitry. Each of the light valve components includes a chamber that defines an optical path, particles within the chamber, and a mechanism for transversely repositioning the particles in relation to the optical path in response to voltages provided by the electrical circuitry.

The "transmitted light" mode engines can be fabricated and/or laminated on glass (or other substrates) to create transparent or substantially transparent displays. Thus, it is envisioned that the principles disclosed herein can be used to provide electronic displays anywhere where glass or other transparent or substantially transparent surfaces are illuminated by natural light or other light sources.

In various embodiments, the particles are selected depending upon a terminal velocity of the particles in the solvent (liquid or gas) as a function of particle size and solvent. By way of example, and referring to Figure 3, the terminal velocity of spherical toner particles as a function of toner size and solvent can be calculated using two fluidic drag approaches. In this example calculation, velocities were calculated across 0.1-10 μm diameter ranges in both air and water in an electric field of 1e5 V/m (10V across 10 μm). The calculation provides an estimate of the capabilities of a micro-optical switch that spatially transfers toner on and off a mirror to modulate regions of high and low reflectivity. In Figure 3, a terminal velocity calculations plot 300 includes example particle velocity thresholds 302 and 304 for SLMs and electronic paper displays, respectively. With respect to the particle velocity threshold 302, a "high speed" optical switch requires a terminal velocity of 1m/s (20 μm travel at a frequency of 50kHz). By way of example, this high switching speed would be desirable for a SLM in a digital projector and potentially an optical communications switch. With respect to the particle velocity threshold 302, electronic paper-like displays require a much lower terminal velocity 0.001m/s (20 μm travel at a frequency of 50Hz). In both calculation methods (denoted "Method 1" and "Method 2" in Figure 3), particle charge, $q_t$, was calculated using a constant surface charge per area of 3.18x10$^{-5}$ C/m$^2$ multiplied by surface area of the particle. The surface charge per area is based on a 10$^{-14}$C charge on a 10 μm diameter particle cited in Mizes, Beachner and Ramesh, "Optical Measurements of Toner Motion in a Development Nip", Journal of Imaging Science and Technology, v44, #3, May, June 2000, pg 200-218, incorporated herein by reference.

With respect to Method 1, as provided by R. Shankar Subramanian adaptation to Clift, Grace and Webber, Bubble, Drops and Particles, Academic Press, 1978, incorporated herein by reference, the terminal velocity, V, of the toner particle can be calculated as:

$$V = \left( \frac{8 F_{es}}{\pi \rho d^2 C_d} \right)^{1/2}$$

$$F_{es} = q_t E$$

$$C_d = \frac{9}{2} + \frac{24}{\text{Re}} \qquad \text{for Re} \leq 0.01$$

$$C_d = \frac{24}{\text{Re}} \left[ 1 + 0.1315 \, \text{Re}^{(0.82 - 0.05 \log_{10} \text{Re})} \right] \qquad \text{for } 0.01 < \text{Re} \leq 20$$

$$\text{Re} = \frac{dV\rho}{\mu}$$

where $F_{es}$ is the electrostatic force of the particle with particle charge, $q_t$, in the electric field, E. The drag coefficient, $C_d$, is calculated from the Reynolds number, where, d, is the particle diameter, p, is the particle density and, μ, is the solvent viscosity. An initial estimate of the particle velocity of 0.01 and 1.0m/s was used to estimate the Reynolds number and the drag coefficient for water and air, respectively.

With respect to Method 1, as provided by Mizes et al. (above) and Schein, Electrophotography and Development Physics, Laplacian Press, 1996, pg 88, incorporated herein by reference, the terminal velocity, V, of the toner 10 particle can be calculated as:

EP 1 626 302 A1

$$V = \frac{F_{es}}{3\pi\mu d}$$

As shown in Figure 3, for the purposes of this example, both calculation methods were in fair agreement. The graph suggests that a micro-optical switch using toner particles greater than 1.8 $\mu$m in air could achieve the 1m/s terminal velocity necessary for spatial light modulators in digital projectors. Additionally, the calculations suggest that particles actuated in water are approximately two orders of magnitude slower than particles actuated in air. Although particles actuated in water may not meet the 50kHz threshold needed for a digital projector, they would be suitable for electronic paper displays.

Additionally, in some embodiments, the determination of particle size (e.g., in water) is a function of the voltages levels used with the substrate electronics (e.g., CMOS). In various embodiments, black liquid toner is capable of providing sufficient frequency response. It should be appreciated, however, that various solvents can be used. By way of example, suitable fluids can be made from the following: 1,1,-diphenylethylene, chlorobenzene, aldehydes, carboxylic acids, ketones, and ester.

In some embodiments, particles are approximately 1-10 $\mu$m in diameter. Examples of such optical engines and their design parameters are set forth in the following tables:

Table 1

| Device Description/Parameter | Example #1 | Example #2 | Example #3 | Example #4 |
|---|---|---|---|---|
| Device Type | SLM | SLM | E-paper | E-paper |
| Solvent | Air | Air | Air | Air |
| Particle Size [um] | 1-10 | 1-10 | 1-10 | 1-10 |
| Inner-Outer Potential Difference [V] | 10 | 10 | 10 | 10 |
| Pixel Size [um] | 20 | 20 | 20 | 20 |
| Device Design | Ring Design | Wall Design | Ring Design | Wall Design |
| Inner Electrode Size [um] | 15 | 15 | 15 | 15 |
| Inner-Outer Electrode Spacing [um] | 1 | 1 | 1 | 1 |
| Outer Electrode Size [um] | 3 | 3 | 3 | 3 |
| Distance between Pixels [um] | 1 | 1 | 1 | 1 |
| Pixel and/or Wall Height [um] | 10 | 10 | 10 | 10 |
| Particle Velocity [m/s] | 1 | 1 | 1 | 1 |

Table 2

| Device Description/Parameter | Example #5 | Example #6 | Example #7 | Example #8 |
|---|---|---|---|---|
| Device Type | E-paper | E-paper | E-paper | E-paper |
| Solvent | Water | Water | Air | Air |
| Particle Size [um] | 1-10 | 1-10 | 1-10 | 1-10 |
| Inner-Outer Potential Difference [V] | 10 | 10 | 10 | 10 |
| Pixel Size [um] | 20 | 20 | 200 | 200 |
| Device Design | Ring Design | Wall Design | Ring Design | Wall Design |
| Inner Electrode Size [um] | 15 | 15 | 150 | 150 |
| Inner-Outer Electrode Spacing [um] | 1 | 1 | 10 | 10 |
| Outer Electrode Size [um] | 3 | 3 | 30 | 30 |

Table continued

| Device Description/Parameter | Example #5 | Example #6 | Example #7 | Example #8 |
|---|---|---|---|---|
| Distance between Pixels [um] | 1 | 1 | 10 | 10 |
| Pixel and/or Wall Height [um] | 10 | 10 | 100 | 100 |
| Particle Velocity [m/s] | 0.01 | 0.01 | 0.1 | 0.1 |

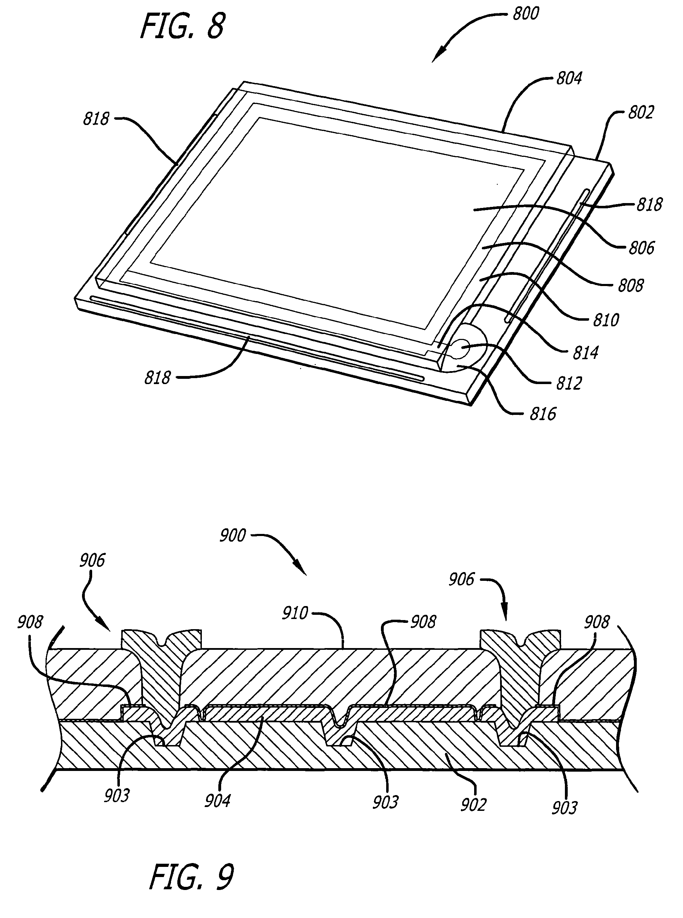

In various example embodiments, a display device such as a spatial light modulator (SLM) includes an array of MEMS-based light valves individually controlled to vary in transmissivity via repositioning of charged particles within the MEMS-based light valves. Referring to Figure 8, in an example embodiment, a spatial light modulator 800 includes a substrate 802 (e.g., silicon wafer) and a cover layer 804 (e.g., glass). An array of optical engines is formed within a region 806 on the substrate 802. An electrical circuitry routing and alignment tolerance zone 808 separates the optical engines from a seal ring area 810. The optical engines are fluidically connected to a fill port 812 by a trench 814 (e.g., beneath the seal ring). In this example, the fill port 812 has been closed by a fill port sealant 816 (e.g., an adhesive). Bond pad regions 818 facilitate electrical connections to external circuitry.

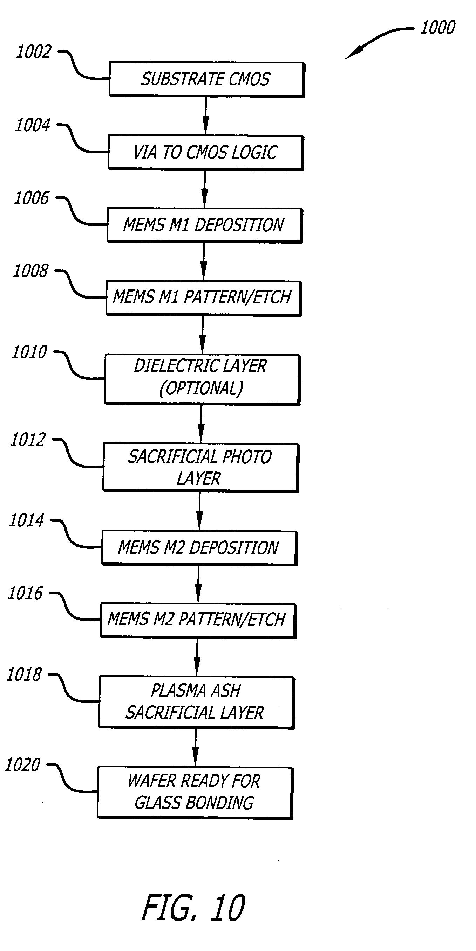

Figure 9 shows an example optical engine 900 during fabrication, and Figure 10 shows an example process flow 1000 for fabricating the optical engine 900. Referring to Figure 9, a substrate 902, vias 903, a first metal layer 904 (M1), a second metal layer 906 (M2), a dielectric layer 908 (optional), and a sacrificial photo layer 910 are shown. Referring to Figure 10, at step 1002, the substrate 902 (e.g., substrate/CMOS) is provided. For a transmissive engine, as discussed above, a plastic or other substantially transparent substrate with electrical circuitry is provided. At step 1004, vias are formed to the CMOS logic (e.g., with a photo etch process). At step 1006, a MEMS M1 (e.g., AlCu) deposition is performed. For a transmissive engine, as discussed above, a transparent conductive material such as ITO is instead deposited. At step 1008, a MEMS M1 pattern/etch process (e.g., photo etch) is performed to separate the first metal layer 904 into inner and outer electrode portions. At step 1010 (optional), the dielectric layer 908 is formed over the first metal layer 904 to reduce stiction of particles within the optical engine. By way of example, the dielectric layer 908 includes $Si_3N_4$, SiC or TEOS. For configurations where the outer electrode is a "ring" around the inner electrode and the two electrodes are substantially planar, the following steps are not performed. For configurations where the outer electrode is a "wall" around the inner electrode, the process flow 1000 advances to subsequent steps. At step 1012, vias are formed in the dielectric layer 908, if present, then the sacrificial photo layer 910 is provided as shown. At step 1014, a MEMS M2 (e.g., AlCu) deposition is performed. At step 1016, a MEMS M2 pattern/etch process is performed to form the outer "wall" electrode. At step 1018, the sacrificial photo layer 910 is removed with a plasma ash process, resulting at step 1020 with a wafer that is ready for MEMS (seal ring) as discussed below.

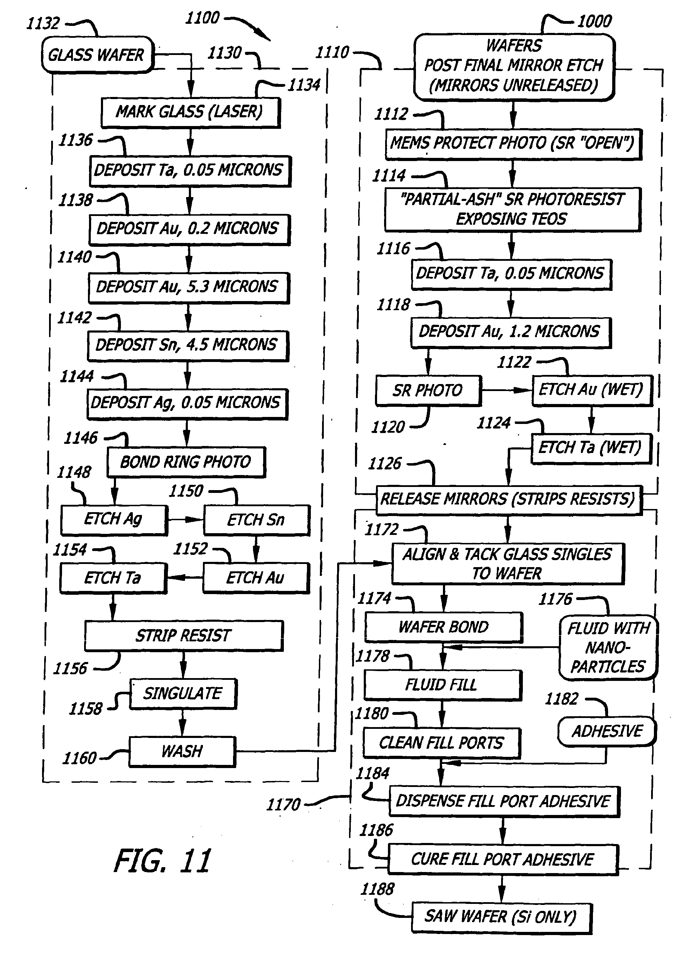

Figure 11 shows an example process flow 1100 for a MEMS portion of an optical engine fabrication process. In this example, the steps include three groups of processes, namely, Si wafer processes 1110, glass processes 1130 and assembly processes 1170 as shown within dashed lines. With respect to the Si wafer processes 1110, at step 1112, a layer of photoresist is applied for forming the seal ring (SR) which functions to seal the array. At step 1114, a "partial ash" is performed to open the SR area. At steps 1116 and 1118, Ta (e.g., 0.05 microns) and Au (e.g., 1.2 microns) are deposited, respectively. At step 1120, a photostep is employed to form the seal ring. At steps 1122 and 1124, non-photostepped Au and Ta are etched (e.g., wet etched) away. At step 1126, the mirrors are released (e.g., by performing a complete ash). If the sacrificial layer is Si, a plasma etch is performed.

With respect to the glass processes 1130, a glass wafer 1132 is marked at step 1134 (e.g., with a laser) with alignment marks which have mating marks on the Si layer. Next, glass/silicon bonding material is deposited. In this example, there is a ring seal on both the Si and the glass. More specifically, at step 1136, Ta (e.g., 0.05 microns) is deposited. At step 1138, Au (e.g., 0.2 microns) is deposited. At step 1140, Au (e.g., 5.3 microns) is deposited. At step 1142, Sn (e.g., 4.5 microns) is deposited. At step 1144, Ag (e.g., 0.05 microns) is deposited to prevent corrosion/oxidation. At step 1146, ring photo is applied. At steps 1148, 1150, 1152 and 1154, Ag, Sn, Au and Ta are etched, respectively. At step 1156, the resist is stripped (e.g., by performing an ash). At step 1158, glass singles are created (e.g., by sawing or scribing), followed at step 1160 by a wash.

With respect to the assembly processes 1170, at step 1172, the glass singles are aligned and tacked to the Si wafer. At step 1174, the two seal ring portions are bonded together, e.g., with pressure and heat, between the Au of the Si wafer) and the Sn (of the glass). In this example, a fluid 1176 with nanoparticles is injected at step 1178 through the fill port. An adhesive 1182 (e.g., a two-part epoxy) is dispensed at step 1184 into the fill port. At step 1186, the adhesive is cured. At step 1188, the wafer is sawed (for Si only). As described herein, optical engines can be fabricated with a single MEMS mask layer (with additional layers for logic). Thus, in an example embodiment, a method of making a display device includes providing a substrate, and fabricating on the substrate actuated particle engines, absent driving logic, with a single MEMS mask layer.

In another embodiment, a method of making a display device includes providing a substrate that includes integrated electronics, fabricating light engines on the substrate (each of the light engines including a chamber, which defines an optical path through the light engine, and electrodes that are electrically connected to the integrated electronics), providing transparent covers for the light engines, selecting charged particles that are substantially opaque, and sealing the charged particles within the chambers such that output voltages applied to the electrodes by the integrated electronics cause the charged particles to move transversely across the optical paths. In some embodiments, as described above, the charged particles along with a solvent are sealed within the chambers, and the charged particles are selected depending upon a relationship between a size and a terminal velocity of the particles in the solvent.

Although the present invention has been described in terms of the example embodiments above, numerous modifications and/or additions to the above described embodiments would be readily apparent to one skilled in the art. It is intended that the scope of the present invention extend to all such modifications and/or additions.

The disclosures in United States patent application no. 10/915,753, from which this application claims priority, and in the abstract accompanying this application are incorporated herein by reference.

**Claims**

1. A display device including:

    a base (402, 502, 602, 702) including electrical circuitry; and
    light valve components formed over the base (402, 502, 602, 702), each of the light valve components including a chamber (406, 506, 606, 706) that defines an optical path, particles (408, 508, 608, 708) within the chamber (406, 506, 606, 706), and means for transversely repositioning the particles (408, 508, 608, 708) in relation to the optical path in response to voltages provided by the electrical circuitry.

2. The display device of claim 1, wherein the particles (408, 508, 608, 708) are charged, and the means for transversely repositioning includes electrodes.

3. The display device of claim 2, wherein the electrodes are formed over the base (402, 502, 602, 702).

4. The display device of claim 2, wherein the electrodes include a center electrode (410, 510) positioned within the optical path, the center electrode (410, 510) including a reflective surface (414, 514) facing away from the base (402, 502), and an outer electrode (412, 512) positioned around the center electrode (410, 510).

5. The display device of claim 4, wherein the center and outer electrodes (410, 412) are substantially planar.

6. The display device of claim 4, further including:

    an array of microlenses (416) positioned adjacent to the light valve components such that, for each of the light valve components, one of the microlenses (416) directs light along the optical path and incident upon the center electrode (410).

7. The display device of claim 4, wherein, for each of the light valve components, the outer electrode (512) includes an inner wall (515) that extends above and is substantially perpendicular to the reflective surface of the center electrode (510).

8. The display device of claim 2, wherein the electrodes include a center electrode (610, 710) positioned within the light path, the center electrode (610, 710) being substantially transparent, and an outer electrode (612, 712) positioned around the center electrode (610, 710).

9. The display device of claim 8, wherein the center electrode (610) and the outer electrode (612) are substantially planar.

10. The display device of claim 8, wherein the center electrode (710) includes a surface (714) facing away from the base (702), and the outer electrode (712) includes an inner wall (715) that is substantially perpendicular to the surface (714).

FIG. 1

FIG. 2

FIG. 3

FIG. 4A

FIG. 4B

FIG. 5A

FIG. 5B

FIG. 6A

FIG. 6B

FIG. 7A

FIG. 7B

FIG. 8

FIG. 9

```
1002 ──┐   ┌──────────────────────┐                    ┌─ 1000
        └──│    SUBSTRATE CMOS     │
           └──────────────────────┘
                       │
                       ▼
1004 ──┐   ┌──────────────────────┐
        └──│    VIA TO CMOS LOGIC  │
           └──────────────────────┘
                       │
                       ▼
1006 ──┐   ┌──────────────────────┐
        └──│   MEMS M1 DEPOSITION  │
           └──────────────────────┘
                       │
                       ▼
1008 ──┐   ┌──────────────────────┐
        └──│  MEMS M1 PATTERN/ETCH │
           └──────────────────────┘
                       │
                       ▼
1010 ──┐   ┌──────────────────────┐
        └──│   DIELECTRIC LAYER    │
           │     (OPTIONAL)        │
           └──────────────────────┘
                       │
                       ▼
1012 ──┐   ┌──────────────────────┐
        └──│   SACRIFICIAL PHOTO   │
           │        LAYER          │
           └──────────────────────┘
                       │
                       ▼
1014 ──┐   ┌──────────────────────┐
        └──│   MEMS M2 DEPOSITION  │
           └──────────────────────┘
                       │
                       ▼
1016 ──┐   ┌──────────────────────┐
        └──│  MEMS M2 PATTERN/ETCH │
           └──────────────────────┘
                       │
                       ▼
1018 ──┐   ┌──────────────────────┐
        └──│     PLASMA ASH        │
           │   SACRIFICIAL LAYER   │
           └──────────────────────┘
                       │
                       ▼
1020 ──┐   ┌──────────────────────┐
        └──│   WAFER READY FOR     │
           │    GLASS BONDING      │
           └──────────────────────┘
```

FIG. 10

1132

1100

GLASS WAFER

1130

1134

MARK GLASS (LASER)

1136

DEPOSIT Ta, 0.05 MICRONS

1138

DEPOSIT Au, 0.2 MICRONS

1140

DEPOSIT Au, 5.3 MICRONS

1142

DEPOSIT Sn, 4.5 MICRONS

1144

DEPOSIT Ag, 0.05 MICRONS

1146

BOND RING PHOTO

1148

1150

ETCH Ag → ETCH Sn

1154

1152

ETCH Ta ← ETCH Au

STRIP RESIST

1156

SINGULATE

1158

WASH

1160

1110

1000

WAFERS
POST FINAL MIRROR ETCH
(MIRRORS UNRELEASED)

1112

MEMS PROTECT PHOTO (SR "OPEN")

1114

"PARTIAL-ASH" SR PHOTORESIST
EXPOSING TEOS

1116

DEPOSIT Ta, 0.05 MICRONS

1118

DEPOSIT Au, 1.2 MICRONS

1122

SR PHOTO → ETCH Au (WET)

1120

1124

ETCH Ta (WET)

1126

RELEASE MIRRORS (STRIPS RESISTS)

1172

ALIGN & TACK GLASS SINGLES
TO WAFER

1174

1176

WAFER BOND

FLUID WITH
NANO-
PARTICLES

1178

FLUID FILL

1182

1180

CLEAN FILL PORTS

ADHESIVE

1184

1170

DISPENSE FILL PORT ADHESIVE

1186

CURE FILL PORT ADHESIVE

1188

SAW WAFER (Si ONLY)

FIG. 11

**European Patent Office**

**EUROPEAN SEARCH REPORT**

Application Number

EP 05 25 4504

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 03/009059 A (SIPIX IMAGING, INC) 30 January 2003 (2003-01-30) * abstract * * page 6, line 8 - line 11 * * figure 2 * | 1-5 | G02B26/02 G02F1/167 |
| A | | 6-10 | |
| X | WO 2004/036306 A (CANON KABUSHIKI KAISHA) 29 April 2004 (2004-04-29) * abstract * * page 19, line 9 - page 19, line 15 * * figures * | 1-4,6 | |
| A | | 5,7-10 | |
| X | US 2003/030884 A1 (MINAMI MASATO) 13 February 2003 (2003-02-13) * abstract * * paragraph [0095] - paragraph [0107] * * paragraph [0126] - paragraph [0129] * * figures * | 1-4,7 | |
| Y | | 10 | TECHNICAL FIELDS SEARCHED (Int.Cl.7) |
| A | | 5,6,8,9 | G02B G02F |
| X | US 6 184 856 B1 (GORDON, II JOSEPH GROVER ET AL) 6 February 2001 (2001-02-06) * abstract * * column 5, line 66 - column 6, line 11 * * figures * | 1-3,8,9 | |
| Y | | 10 | |
| A | | 4-7 | |

-/--

The present search report has been drawn up for all claims

| Place of search | Date of completion of the search | Examiner |
|---|---|---|
| The Hague | 22 August 2005 | Seibert, J |

EPO FORM 1503 03.82 (P04C01)

**European Patent Office**

**EUROPEAN SEARCH REPORT**

Application Number

EP 05 25 4504

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KISHI E ET AL: "DEVELOPMENT OF IN-PLANE EPD" 2000 SID INTERNATIONAL SYMPOSIUM DIGEST OF TECHNICAL PAPERS. LONG BEACH, CA, MAY 16 - 18, 2000, SID INTERNATIONAL SYMPOSIUM DIGEST OF TECHNICAL PAPERS, SAN JOSE, CA : SID, US, vol. VOL. 31, May 2000 (2000-05), pages 24-27, XP001086658 * the whole document * | 1-3 | |
| A | | 4-10 | |
| A | PATENT ABSTRACTS OF JAPAN vol. 017, no. 360 (P-1569), 7 July 1993 (1993-07-07) -& JP 05 053101 A (SHARP CORP), 5 March 1993 (1993-03-05) * abstract; figure 2 * | 1-10 | |

TECHNICAL FIELDS SEARCHED (Int.Cl.7)

The present search report has been drawn up for all claims

| Place of search | Date of completion of the search | Examiner |
|---|---|---|
| The Hague | 22 August 2005 | Seibert, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 4504

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2005

| Patent document cited in search report | | Publication date | Patent family member(s) | | Publication date |
|---|---|---|---|---|---|
| WO 03009059 | A | 30-01-2003 | CN | 1397831 A ,C | 19-02-2003 |
| | | | EP | 1407321 A1 | 14-04-2004 |
| | | | JP | 2004536344 T | 02-12-2004 |
| | | | TW | 552485 B | 11-09-2003 |
| | | | WO | 03009059 A1 | 30-01-2003 |
| | | | US | 2003035198 A1 | 20-02-2003 |
| | | | US | 2004190115 A1 | 30-09-2004 |
| WO 2004036306 | A | 29-04-2004 | JP | 2004138959 A | 13-05-2004 |
| | | | JP | 2004138960 A | 13-05-2004 |
| | | | AU | 2003301470 A1 | 04-05-2004 |
| | | | EP | 1554632 A1 | 20-07-2005 |
| | | | WO | 2004036306 A1 | 29-04-2004 |
| | | | US | 2004135764 A1 | 15-07-2004 |
| US 2003030884 | A1 | 13-02-2003 | JP | 2003114452 A | 18-04-2003 |
| US 6184856 | B1 | 06-02-2001 | NONE | | |
| JP 05053101 | A | 05-03-1993 | NONE | | |

EPO FORM P0459

For more details about this annex : see Official Journal of the European Patent Office, No. 12/82